# EUROPEAN PATENT SPECIFICATION

(11) **EP 4 324 689 B1**
(45) Date of publication and mention of the grant of the patent: **09.12.2026**
(21) Application number: 21936286.0
(22) Date of filing: 12.04.2021
(51) Int. Cl.: B60L 15/20, B60L 58/10, B60L 58/14, B60L 58/15, H01M 10/44, H02J 7/00

(54) **TORQUE CONTROL METHOD AND TORQUE CONTROL SYSTEM FOR ELECTRIC DRIVE SYSTEM**
DREHMOMENTSTEUERUNGSVERFAHREN UND DREHMOMENTSTEUERUNGSSYSTEM FÜR EIN ELEKTRISCHES ANTRIEBSSYSTEM
PROCÉDÉ DE COMMANDE DE COUPLE ET SYSTÈME DE COMMANDE DE COUPLE POUR SYSTÈME D'ENTRAÎNEMENT ÉLECTRIQUE

(43) Date of publication of application: 21.02.2024
(73) Proprietor: Zhejiang Geely Holding Group Co., Ltd., Hangzhou, Zhejiang 310051 (CN); Geely Automobile Research Institute (Ningbo) Co., Ltd., Ningbo, Zhejiang 315336 (CN)
(72) Inventor: YE, Xianjun, Hangzhou, Zhejiang 310051 (CN)
(74) Representative: Range, Christopher William
(86) International application number: PCT/CN2021/086355
(87) International publication number: WO 2022/217389

(56) References cited:
- CN-A- 101 284 532
- CN-A- 104 868 515
- CN-A- 106 451 592
- CN-A- 106 451 592
- CN-A- 106 585 402
- CN-A- 110 549 858
- JP-A- 2012 200 048
- US-A1- 2010 033 132
- US-A1- 2011 260 659

## Description

### FIELD

The present invention relates to the field of control over electric drive systems, and more particularly, to a torque control method and a torque control system for an electric drive system.

### BACKGROUND

At present, rechargeable lithium batteries may be basically used as high-voltage batteries for pure electric vehicles, (plug-in) hybrid vehicles or other new energy vehicles. A voltage is an important parameter of the lithium-ion battery. Further, a cut-off voltage refers to an allowable minimum voltage in battery discharge and an allowable maximum voltage in battery charge. If the battery continuous to discharge when the voltage is lower than a discharge cut-off voltage, a potential of an anode of the battery continues to decrease, while a potential of a cathode thereof rises rapidly, forming excessive discharge. The excessive discharge may result in damages to electrode active substances, lose the ability to react, and shorten the battery life, and also cause a cathode copper foil to decompose and precipitate at the anode, resulting in a risk of short circuit. When a charge voltage is higher than a charge cut-off voltage, the potential of the anode of the battery continues to rise, resulting in excessive lithium removal of an anode material, failure in damage of crystal structures, and lithium ion loss in electrolyte decomposition. However, the potential of the cathode will continue to decrease, resulting in excessive lithium insertion, layered disintegration of graphite, lithium precipitation on the surface of an electrode plate, and other problems.

In order to avoid the voltage drop (lower than a minimum cut-off operating voltage) of a high-voltage battery of a pure electric vehicle, a (plug-in) hybrid electric vehicle or other electric vehicles in the operating process when an electric drive system in an electric mode uses electricity from the high-voltage battery, and avoid a case where a battery voltage rises to be higher than a maximum cut-off operating voltage when the battery is charged in an energy recovery mode, it is necessary to reasonably limit an available torque of the electric drive system based on an actual voltage and its cut-off operating voltage, and ensure the smooth torque output of the electric drive system.

In view of the problem that the voltage of the high-voltage battery of the pure electric vehicle or (plug-in) hybrid vehicle should be ensured within a cut-off voltage range, the main concern in the current industry is the control over the charging of the vehicle, e.g., the process of charging by a fast charging device (DC charging pile) or a slow charging device (on-board charger). However, the damages, i.e., the voltage drops caused by the driven or hybrid electric vehicle starts an engine during vehicle operation at a low SOC (State of Charge), and the battery voltage exceeding its cut-off operating voltage (which gets worse after the battery ages) under voltage rise or other operating conditions caused by energy recovery of the vehicle at high SOC, to the high-voltage battery are neglectable. The abuse of the battery under the above operating conditions shortens the service life of the high-voltage battery.

Although some automobile enterprises and/or suppliers have paid attention to this problem, in the design of a control system, a control method is relatively simple. That is, when an actual voltage drops to a minimum cut-off operating voltage, the electric output of an electric drive system is cut off, and when the actual voltage is higher than a maximum cut-off operating voltage, the power generation output of the electric drive system is cut off. Due to the hysteresis in the control, as well as measured actual battery voltage errors, and estimated cut-off voltage errors, overcharging and overdischarging phenomena still exist in such control methods, thereby easily leading to the problems in terms of drivability.
US 2010033132 A1 discloses a system for controlling a secondary battery. The system includes a battery and motors. The inputtable and outputtable powers are et according to the comparison between predicted terminal voltage and determination values. When the predicted terminal voltage lowers excessively in to a range of (Vb#<V1), the outputtable power is set to zero for inhibiting further discharging. When the predicted terminal voltage has not lowered excessively and is in a range of (Vb#>V2), discharge restriction is not performed. Further, in the range of (V1<Vb#<V2), the discharging is restrictively allowed, but outputtable power is restricted to be lower than the ordinary range of (Vb#>V2). Likewise, when the predicted terminal voltage rises excessively, inputtable power is set to zero for inhibiting further charging. When the predicted terminal voltage has not risen to a large extent and is in a range of (Vb#<V3), the discharge restriction is not performed. Further, in the range of (V3<Vb#<V4), the charging is restrictively allowed, but inputtable power Win is restricted to be lower than the ordinary range (Vb#<V3).
US 20110260659 A1 discloses a control apparatus of an electric vehicle, which is operable to be driven by supplying electric power from a battery to an electric motor to drive the electric motor and operable to perform regeneration charge, includes: a request torque calculating unit calculating a request torque of the electric motor; a motor control unit controlling the electric motor based on the request torque; and a torque suppression unit performing a feed forward control for setting the request torque based on a rotational angular speed of the electric motor so that an integrated value of a torque and a rotational angular speed of the electric motor at time when the electric motor is driven or the regeneration charge is performed is identical to an integrated value of the torque and the rotational angular speed stored at a point of time when the battery voltage or the battery current reaches the limit level.

### SUMMARY

**In** view of the above problems, the present invention provides a torque control method and a torque control system in order to overcome or at least partially solve the above problems.

In a first aspect of the present invention, an object is to provide a torque control method capable of effectively protecting a high-voltage battery of a vehicle.

Another object of the present invention is to ensure the driving smoothness of the vehicle.

In a second aspect of the present invention, an object is to provide a torque control system capable of effectively protecting a high-voltage battery of a vehicle.

In particular, an aspect of embodiments of the present invention provides a torque control method for an electric drive system. The electric drive system includes a high-voltage battery and a motor, the torque control method including: obtaining a charge cut-off voltage and a discharge cut-off voltage of the high-voltage battery; setting an allowable charge lower limit value and an allowable discharge upper limit value, in which the allowable charge lower limit value is smaller than the charge cut-off voltage, and the allowable discharge upper limit value is greater than the discharge cut-off voltage; comparing an actual voltage of the high-voltage battery with each of the allowable charge lower limit value and the allowable discharge upper limit value; setting a dynamic target voltage value when the actual voltage of the high-voltage battery is greater than or equal to the allowable charge lower limit value or is smaller than or equal to the allowable discharge upper limit value, in which the dynamic target voltage value is configured to prevent a voltage of the high-voltage battery from rising beyond the charge cut-off voltage during charging and falling below the discharge cut-off voltage during discharging; calculating a target torque value based on the actual voltage of the high-voltage battery and the dynamic target voltage value; setting an available torque limit value of the electric drive system based on the target torque value and a comparison result of the actual voltage of the high-voltage battery with each of the allowable charge lower limit value and the allowable discharge upper limit value, and controlling a torque output of the motor based on the available torque limit value.

Said setting the dynamic target voltage value when the actual voltage of the high-voltage battery is greater than or equal to the allowable charge lower limit value or is smaller than or equal to the allowable discharge upper limit value includes: setting the dynamic target voltage value to increase to the charge cut-off voltage from the allowable charge lower limit value at a first predetermined slope, when the actual voltage of the high-voltage battery is greater than or equal to the allowable charge lower limit value; and setting the dynamic target voltage value to decrease to the discharge cut-off voltage from the allowable discharge upper limit value at a second predetermined slope, when the actual voltage of the high-voltage battery is smaller than or equal to the allowable discharge upper limit value.

Optionally, said calculating the target torque value based on the actual voltage of the high-voltage battery and the dynamic target voltage value includes: calculating a difference between the actual voltage and the dynamic target voltage value; calculating a torque limit value based on the difference and a PID control algorithm; and calculating a difference between an actual output torque of the motor and the torque limiting value as the target torque value.

Optionally, said setting the allowable charge lower limit value and the allowable discharge upper limit value includes: setting a difference between the charge cut-off voltage and a first set value as the allowable charge lower limit value; and setting a sum of the discharge cut-off voltage and a second set value as the allowable discharge upper limit value. The first set value is a calibrated positive number, and the second set value is a calibrated positive number.

Optionally, the available torque limit value includes an available electric torque limit value and an available power generation torque limit value.

Optionally, said setting the available torque limit value of the electric drive system based on the target torque value and the comparison result of the actual voltage of the high-voltage battery with each of the allowable charge lower limit value and the allowable discharge upper limit value, includes: setting the available power generation torque limit value of the electric drive system as the target torque value, and setting the available electric torque limit value of the electric drive system as a maximum electric torque output capacity of the electric drive system, when the actual voltage of the high-voltage battery is greater than or equal to the allowable charge lower limit value.

Optionally, said setting the available torque limit value of the electric drive system based on the target torque value and the comparison result of the actual voltage of the high-voltage battery with each of the allowable charge lower limit value and the allowable discharge upper limit value, includes: setting the available electric torque limit value of the electric drive system as the target torque value, and setting the available power generation torque limit value of the electric drive system as a maximum power generation capacity of the electric drive system, when the actual voltage of the high-voltage battery is smaller than or equal to the allowable discharge upper limit value.

Optionally, said setting the available torque limit value of the electric drive system based on the target torque value and the comparison result of the actual voltage of the high-voltage battery with each of the allowable charge lower limit value and the allowable discharge upper limit value includes: setting the available electric torque limit value of the electric drive system as a maximum electric torque output capacity of the electric drive system, and setting the available power generation torque limit value of the electric drive system as a maximum power generation torque output capacity of the electric drive system, when the actual voltage of the high-voltage battery is smaller than the allowable charge lower limit value and greater than the allowable discharge upper limit value.

Optionally, said obtaining the charge cut-off voltage and the discharge cut-off voltage of the high-voltage battery includes: obtaining a state parameter of the high-voltage battery, the state parameter including a battery state of charge and/or a battery temperature; and determining the charge cut-off voltage and the discharge cut-off voltage of the high-voltage battery based on the state parameter.

In particular, according to another aspect of embodiments of the present invention, a torque control system for an electric drive system is further provided. The torque control system includes a memory having a control program stored thereon, and a processor. The control program is configured to, when executed by the processor, implement the torque control method according to any one of above aspects.

According to the present invention, the actual voltage of the high-voltage battery is controlled by setting the dynamic target voltage value when the actual voltage exceeds the allowable charge lower limit value and is close to a charge cut-off voltage, or exceeds the allowable discharge upper limit value and is close to a discharge cut-off voltage. That is, on the basis of the limitations of the discharge cut-off voltage and the charge cut-off voltage, a reasonable buffer space is established for an allowable charge capacity or discharge capacity of the high-voltage battery. That is, an available torque of the electric drive system in a power generation state or electric state at this time is constrained, and a case where the voltage of the high-voltage battery is raised to be higher than a maximum allowable operating voltage or pulled down to be lower than a minimum allowable operating voltage, without limiting its electric torque, is avoided. When the actual voltage of the high-voltage battery is close to its charge cut-off voltage or discharge cut-off voltage, the voltage is stabilized as much as possible to prevent the voltage from further rising beyond its charge cut-off voltage or further falling below its discharge cut-off voltage, thereby avoiding damages of overcharge or overload to the high-voltage battery and ensuring the service life of the battery.

Further, the present invention can achieve a smooth transition of the actual voltage of the high-voltage battery by reasonably setting the first predetermined slope and the second predetermined slope. Further, the present invention can achieve a smooth transition of an available power generation torque limit value of the electric drive system or a smooth transition of an available electric torque limit value of the electric drive system, thereby avoiding the problems in terms of drivability such as whole vehicle impact caused by the sudden change in the torque output of the electric drive system. That is, it is possible to ensure a smooth transition of the driving torque of the whole vehicle.

Further, in the present embodiment, the dynamic target voltage value is set to increase to the charge cut-off voltage from the allowable charge lower limit value at the first predetermined slope, when the voltage of the high-voltage battery is greater than or equal to the allowable charge lower limit value; and the dynamic target voltage value is set to decrease to the discharge cut-off voltage from the allowable discharge upper limit value at the second predetermined slope, when the voltage of the high-voltage battery is smaller than or equal to the allowable discharge upper limit value. That is, a hysteresis is added to the charge cut-off voltage and the discharge cut-off voltage to avoid the impact caused by the frequent switching of torque output of the electric drive system in a stateful or stateless mode due to fluctuations in the voltage of the high-voltage battery near the charge cut-off voltage or the discharge cut-off voltage, thereby ensuring the smoothness of the torque output.

The above description is only an overview of the technical solutions of the present invention, and may be implemented in accordance with the content of the description in order to be able to understand the technical means of the present invention more clearly. In addition, in order to make the above and other objects, features and advantages of the present invention more obvious and easy to understand, the following specific embodiments of the present invention are illustrated below.

According to the following detailed description of the specific embodiments of the present invention in conjunction with the accompanying drawings, those skilled in the art will understand the above and other objects, advantages and features of the present invention clearly.

### BRIEF DESCRIPTION OF THE DRAWINGS

Some specific embodiments of the present invention will be described in detail later with reference to the accompanying drawings in an exemplary rather than restrictive manner. The same numerical symbols in the accompanying drawings indicate identical or similar components or parts. Those skilled in the art should understand that these accompanying drawings are not necessarily drawn to scale. In the drawings:
FIG. 1 is a flowchart of a torque control method for an electric drive system according to an embodiment of the present invention;
FIG. 2 is a flowchart of a torque control method for an electric drive system according to another embodiment of the present invention;
FIG. 3 is a diagram of a correspondence of various voltage parameters in a torque control method for an electric drive system according to an embodiment of the present invention; and
FIG. 4 is a control schematic diagram in the calculation of a torque limit value in a torque control method for an electric drive system according to another embodiment of the present invention.

### DESCRIPTION OF EMBODIMENTS

The exemplary embodiments of the present disclosure are described in detail below with reference to the accompanying drawings. Although the exemplary embodiments of the present disclosure are shown in the drawings, it should be understood that the present disclosure may be implemented in various forms and should not be limited by the embodiments described herein. On the contrary, these embodiments are provided in order to be able to understand the present disclosure more thoroughly, and to be able to fully communicate the scope of the present disclosure to those skilled in the art.

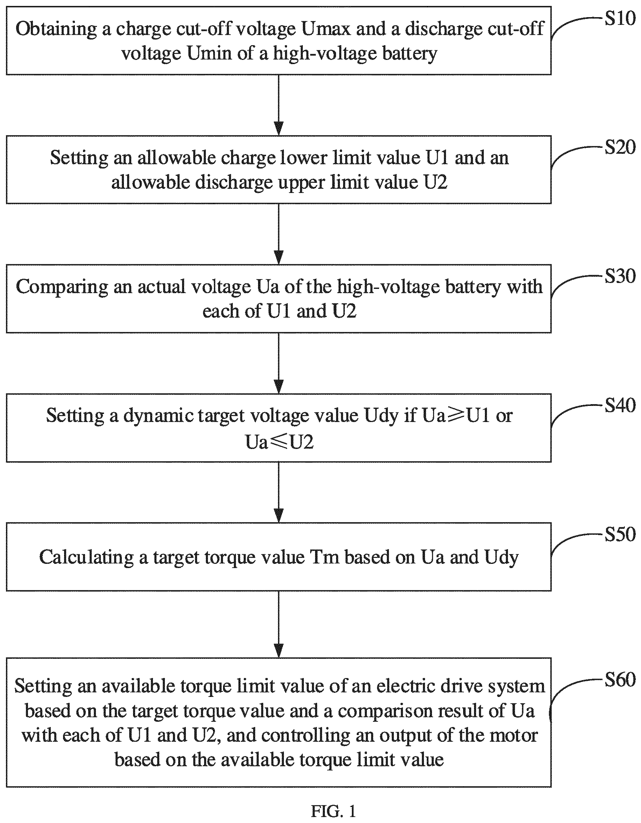

A torque control method of the present invention is applied in an electric drive system, i.e., a vehicle drive system including a high-voltage battery and a motor. FIG. 1 is a flowchart of a torque control method for an electric drive system according to an embodiment of the present invention. As shown in FIG. 1, in the present embodiment, the torque control method includes actions at S10 to S60.

At S10, a charge cut-off voltage Umax and a discharge cut-off voltage Umin of the high-voltage battery is obtained. Optionally, the actions at S10 includes: obtaining a state parameter of the high-voltage battery, in which the state parameter including a battery SOC and/or a battery temperature, etc.; and determining the charge cut-off voltage Umax and the discharge cut-off voltage Umin of the high-voltage battery based on the state parameter. The charge cut-off voltage Umax, also known as a charge-off end voltage, refers to a voltage at which the battery reaches a fully charged state during a specified constant current charging period. When charging continues after reaching the end voltage, overcharging is caused, which generally damages the performances and life of the battery. Generally, a manufacturer of the high-voltage battery will do a lot of tests on the battery to determine the charge cut-off voltage Umax of the high-voltage battery that meets the requirements of safe life.

At S20, an allowable charge lower limit value U1 and an allowable discharge upper limit value U2 are set. The allowable charge lower limit value U1 is smaller than the charge cut-off voltage Umax, and the allowable discharge upper limit value U2 is greater than the discharge cut-off voltage Umin. For example, a difference between the charge cut-off voltage Umax and a first set value is set as the allowable charge lower limit value U1, and the first set value is a calibrated positive number, e.g., a value ranging from 8 to 15, which may be 8, 10, 15, or the like. For example, a sum of the discharge cut-off voltage Umin and a second set value is set as an allowable discharge upper limit value U2, and the second set value is a calibrated positive number, and the second set value may be the same value as the first set value, e.g., a value ranging from 8 to 15, which may be 8, 10, 15, or the like.

At S30, an actual voltage Ua of the high-voltage battery is compared with each of the allowable charge lower limit value U1 and the allowable discharge upper limit value U2.

At S40, a dynamic target voltage value is set when the actual voltage Ua of the high-voltage battery is greater than or equal to the allowable charge lower limit value U1 or is smaller than or equal to the allowable discharge upper limit value U2. The dynamic target voltage value is configured to prevent the voltage of the high-voltage battery from going beyond each of the charge cut-off voltage Umax and the discharge cut-off voltage Umin.

At S50, a target torque value Tm is calculated based on the actual voltage Ua of the high-voltage battery and the dynamic target voltage value Udy.

At S60, an available torque limit value of the electric drive system is set based on the target torque value Tm and a comparison result of the actual voltage Ua of the high-voltage battery with each of the allowable charge lower limit value U1 and the allowable discharge upper limit value U2. Further, a torque output of the motor is controlled based on the available torque limit value. That is, the output torque of the motor is constrained not to exceed this available torque limit value.

In the present embodiment, when the actual voltage Ua exceeds the allowable charge lower limit value U1 and is close to the charge cut-off voltage Umax, or exceeds the allowable discharge upper limit value U2 and is close to the discharge cut-off voltage Umin, the actual voltage Ua of the high-voltage battery is controlled by setting the dynamic target voltage value. That is, on the basis of the limitations of the discharge cut-off voltage Umin and the charge cut-off voltage Umax, a reasonable buffer space is established for an allowable charge capacity or discharge capacity of the high-voltage battery. That is, an available torque of the electric drive system in a power generation state or electric state at this time is constrained, and a case where the voltage of the high-voltage battery is raised to be higher than a maximum allowable operating voltage or pulled down to be lower than the minimum allowable operating voltage, without limiting its electric torque, is avoided. When the actual voltage Ua of the high-voltage battery is close to its charge cut-off voltage Umax or discharge cut-off voltage Umin, the voltage is stabilized as much as possible to prevent the voltage from further rising beyond its charge cut-off voltage Umax or further falling below its discharge cut-off voltage Umin, thereby avoiding damages of overcharge or overload to the high-voltage battery and ensuring the service life of the battery.

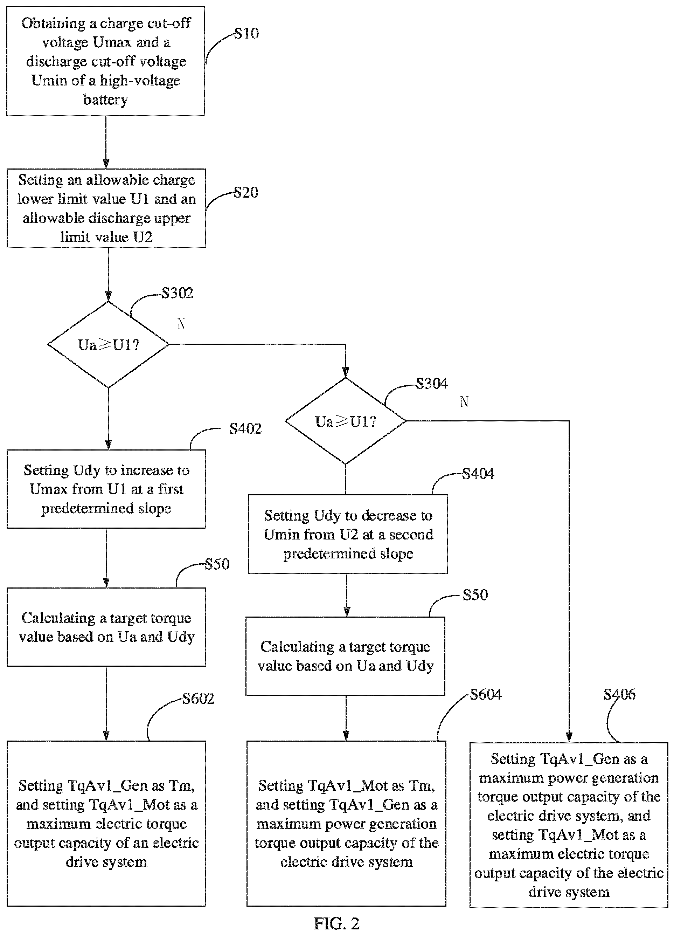

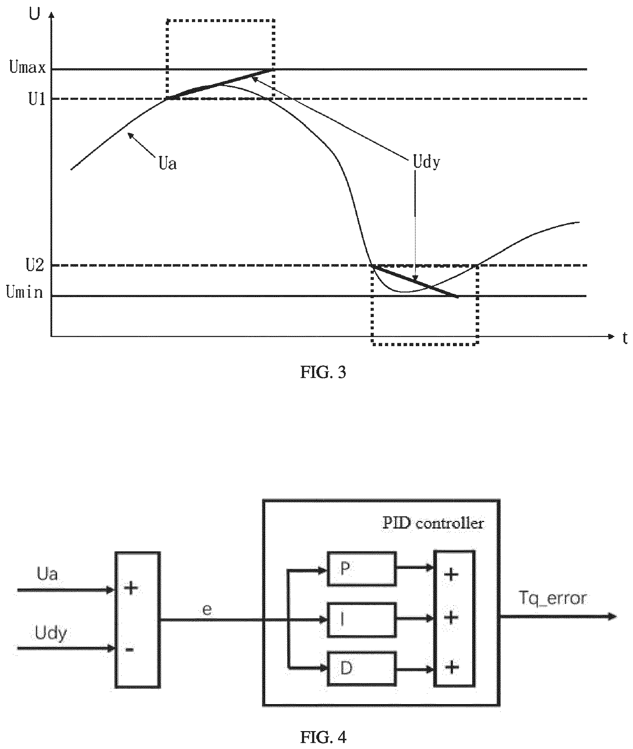

FIG. 2 is a flowchart of a torque control method for an electric drive system according to another embodiment of the present invention. FIG. 3 is a diagram of a correspondence of various voltage parameters in a torque control method for an electric drive system according to an embodiment of the present invention. In FIG. 3, an abscissa is a time, and an ordinate is a voltage value. As shown in FIG. 2, in the present embodiment, the action at S30 includes actions at S302 and S304, and the action at S40 includes actions at S402 and S404.

At S302, it is determined whether the actual voltage Ua of the high-voltage battery is greater than or equal to the allowable lower limit value U1, and the method proceeds to action at S402 if so, otherwise proceeds to action at S304.

At S304, it is determined whether the actual voltage Ua of the high-voltage battery is smaller than or equal to the allowable discharge upper limit value U2, and the method proceeds to action at S404 if so.

At S402, the dynamic target voltage value Udy is set to increase to the charge cut-off voltage Umax from the allowable charge lower limit value U1 at a first predetermined slope.

At S404, the dynamic target voltage value Udy is set to decrease to the discharge cut-off voltage Umin from the allowable discharge upper limit value U2 at a second predetermined slope.

The present invention can achieve a smooth transition of the actual voltage Ua of the high-voltage battery by reasonably setting the first predetermined slope and the second predetermined slope. Further, the present invention can achieve a smooth transition of an available power generation torque limit value TqAvl_Gen of the electric drive system or a smooth transition of an available electric torque limit value TqAvl_Mot of the electric drive system, thereby avoiding the problems in terms of drivability such as whole vehicle impact caused by the sudden change in the torque output of the electric drive system, that is, ensuring a smooth transition of the driving torque of the whole vehicle.

Further, according to the invention, the dynamic target voltage value Udy is set to increase to the charge cut-off voltage Umax from the allowable charge lower limit value U1 at the first predetermined slope, when the voltage of the high-voltage battery is greater than or equal to the allowable charge lower limit value U1; and the dynamic target voltage value Udy is set to decrease to the discharge cut-off voltage Umin from the allowable discharge upper limit value U2 at the second predetermined slope, when the voltage of the high-voltage battery is smaller than or equal to the allowable discharge upper limit value U2. That is, a hysteresis is added to the charge cut-off voltage Umax and the discharge cut-off voltage Umin to avoid the impact caused by the frequent switching of torque output of the electric drive system in a stateful or stateless mode due to fluctuations in the voltage of the high-voltage battery near the charge cut-off voltage Umax or the discharge cut-off voltage Umin, thereby ensuring the smoothness of the torque output.

In an embodiment, the action at S50 includes: calculating a difference between the actual voltage Ua and the dynamic target voltage value Udy; calculating a torque limit value Tq_error based on the difference and a PID control algorithm; and calculating a difference between the actual output torque Tq_act of the motor and the torque limit value Tq_error as the target torque value Tm.

FIG. 4 is a control schematic diagram in the calculation of a torque limit value Tq_error in a torque control method for an electric drive system according to another embodiment of the present invention. As shown in FIG. 4, by entering the difference between the actual voltage Ua and the dynamic target voltage value Udy into a PID controller, the PID controller performs the corresponding PID algorithm to calculate the torque limit value Tq_error. Of course, in other embodiments, other algorithms may be employed to calculate the torque limit value Tq_error based on the difference between the actual voltage Ua and the dynamic target voltage value Udy, as long as the calculated torque limit value Tq_error can reflect the correspondence of the difference between the actual voltage Ua and the target voltage value Udy.

In an embodiment, the available torque limit value includes an available electric torque limit value TqAvl_Mot and an available power generation torque limit value TqAvl_Gen.

As shown in FIG. 2, in an embodiment, the action at S60 after the actions at S402 and S50 includes action at S602, and action at S60 after actions at S404 and S50 includes action at S604.

At S602, the available power generation torque limit value TqAvl_Gen (i.e., a maximum of available power generation torque) of the electric drive system is set as the target torque value Tm, and the available electric torque limit value TqAvl_Mot of the electric drive system is set as a maximum electric torque output capacity of the electric drive system.

Since the electric drive system at this time is in a state of voltage rise (e.g. the battery is charged in an energy recovery mode), and its electric torque output capacity is sufficient, the available electric torque limit value TqAvl_Mot of the electric drive system may be set as its maximum electric torque output capacity to maximize the output of the electric torque.

At S604, the available electric torque limit value TqAvl_Mot of the electric drive system is set as the target torque value Tm, and the available power generation torque limit value TqAvl_Gen of the electric drive system is set as a maximum power generation torque output capacity of the electric drive system.

Since the electric drive system at this time is in a state of voltage drop (e.g., the electric drive system uses the electricity from the high-voltage battery in an electric mode), and its power generation torque output capacity is sufficient, the available power generation torque limit value TqAvl_Gen of the electric drive system may be set as its maximum power generation torque output capacity. In this case, the electric drive system can maximize the output of the power generation torque.

Of course, in some embodiments, when the actual voltage Ua of the high-voltage battery is determined at S304 to be greater than the allowable discharge upper limit value U2, the method proceeds to the action at S406 including: setting the available power generation torque limit value TqAvl_Gen of the electric drive system as the maximum power generation torque output capacity of the electric drive system, and setting the available electric torque limit value TqAvl_Mot as a maximum electric torque output capacity of the electric drive system. At this time, the voltage of the high-voltage battery is between the allowable discharge upper limit value U2 and the allowable charge lower limit value U1. Therefore, the high-voltage battery is in a normal operating condition, without any special settings.

For the actions at S602, S604 or S406, since the motor and its controller in the electric drive system usually have four-quadrant operating functions, i.e., a forward electric operation, an reverse electric operation, a forward power generation, and a reverse power generation, the corresponding outputs of electric torque and power generation torque are also distinguished in forward and reverse modes. Correspondingly, the maximum power generation torque output capacities also include a forward power generation torque output capacity and a reverse power generation torque output capacity, and the maximum electric torque output capacities also include a forward electric torque output capacity and a reverse electric torque output capacity. Therefore, it is necessary to determine an operating state of the motor, and then determine the specific maximum power generation torque output capacity and maximum electric torque output capacity based on the operating state. Specifically, the operating state of the motor may be determined based on the actual torque of the motor and the actual rotational speed of the motor, or based on a required torque of the whole vehicle for the electric drive system and the actual rotational speed of the motor. For example, the process of determining the operating state of the motor based on the actual torque of the motor and the actual rotational speed of the motor is performed in the following manners: (1) determining that the motor is in a forward electric state when the actual torque of the motor is greater than or equal to zero, and the actual rotational speed of the motor is greater than or equal to zero; (2) determining that the motor is in a forward power generation state when the actual torque of the motor is smaller than zero and the actual rotational speed of the motor is greater than or equal to zero; (3) determining that the motor is in an electric reverse state when the actual torque of the motor is smaller than zero, and the actual rotational speed of the motor is smaller than zero; and (4) determining that the motor is in a reverse power generation state when the actual torque of the motor is greater than or equal to zero and the actual rotational speed of the motor is smaller than zero. After the operating state of the motor is determined, the corresponding maximum power generation torque output capacity and maximum electric torque output capacity can be determined. For example, when the motor is determined to be in the forward electric state, the maximum electric torque output capacity is the forward electric torque output capacity.

The present invention further provides a torque control system for an electric drive system. The torque control system includes a memory and a processor. The memory has a control program stored thereon. The control program is executable by the processor to implement the torque control method according to any of the above aspects. The processor may be a central processing unit (CPU), or a digital processing unit, etc. The processor transmits and receives data through a communication interface. The memory is configured to store a program executed by the processor. The memory is any medium capable of carrying or storing a desired program code in the form of instruction or data structure and being accessible by a computer, or a combination of several storage devices. The above computing program may be downloaded from a computer-readable storage medium to the corresponding computing/processing device or downloaded to a computer or external storage device via a network (e.g., the Internet, local area network, wide area network and/or wireless network).

Therefore, although those skilled in the art should appreciate that although exemplary embodiments of the present invention have been exhaustively shown and described herein, many other variants or modifications which conform to the principles of the present invention may still be directly determined or derived according to the content disclosed in the present invention, as long as these modifications fall within the scope of the appended claims.

## Claims

1. A torque control method for an electric drive system, wherein the electric drive system comprises a high-voltage battery and a motor, the torque control method comprising:
obtaining (S10) a charge cut-off voltage and a discharge cut-off voltage of the high-voltage battery;
setting (S20) an allowable charge lower limit value and an allowable discharge upper limit value, the allowable charge lower limit value being smaller than the charge cut-off voltage, and the allowable discharge upper limit value being greater than the discharge cut-off voltage;
comparing (S30) an actual voltage of the high-voltage battery with each of the allowable charge lower limit value and the allowable discharge upper limit value;
setting (S40) a dynamic target voltage value when the actual voltage of the high-voltage battery is greater than or equal to the allowable charge lower limit value or is smaller than or equal to the allowable discharge upper limit value, the dynamic target voltage value being configured to prevent a voltage of the high-voltage battery from rising beyond the charge cut-off voltage during charging and falling below the discharge cut-off voltage during discharging;
calculating (S50) a target torque value based on the actual voltage of the high-voltage battery and the dynamic target voltage value;
setting (S60) an available torque limit value of the electric drive system based on the target torque value and a comparison result of the actual voltage of the high-voltage battery with each of the allowable charge lower limit value and the allowable discharge upper limit value, and controlling a torque output of the motor based on the available torque limit value,
wherein the torque control method is **characterized in that**, said setting the dynamic target voltage value when the actual voltage of the high-voltage battery is greater than or equal to the allowable charge lower limit value or is smaller than or equal to the allowable discharge upper limit value comprises:
setting the dynamic target voltage value to increase to the charge cut-off voltage from the allowable charge lower limit value at a first predetermined slope, when the actual voltage of the high-voltage battery is greater than or equal to the allowable charge lower limit value; and
setting the dynamic target voltage value to decrease to the discharge cut-off voltage from the allowable discharge upper limit value at a second predetermined slope, when the actual voltage of the high-voltage battery is smaller than or equal to the allowable discharge upper limit value.

2. The torque control method according to claim 1, wherein said calculating the target torque value based on the actual voltage of the high-voltage battery and the dynamic target voltage value comprises:
calculating a difference between the actual voltage and the dynamic target voltage value;
calculating a torque limit value based on the difference and a PID control algorithm; and
calculating a difference between an actual output torque of the motor and the torque limiting value as the target torque value.

3. The torque control method according to claim 1, wherein said setting the allowable charge lower limit value and the allowable discharge upper limit value comprises:
setting a difference between the charge cut-off voltage and a first set value as the allowable charge lower limit value, the first set value being a calibrated positive number; and
setting a sum of the discharge cut-off voltage and a second set value as the allowable discharge upper limit value, the second set value being a calibrated positive number.

4. The torque control method according to claim 1, wherein the available torque limit value comprises an available electric torque limit value and an available power generation torque limit value.

5. The torque control method according to claim 4, wherein said setting the available torque limit value of the electric drive system based on the target torque value and the comparison result of the actual voltage of the high-voltage battery with each of the allowable charge lower limit value and the allowable discharge upper limit value comprises:
setting the available power generation torque limit value of the electric drive system as the target torque value, and setting the available electric torque limit value of the electric drive system as a maximum electric torque output capacity of the electric drive system, when the actual voltage of the high-voltage battery is greater than or equal to the allowable charge lower limit value.

6. The torque control method according to claim 4, wherein said setting the available torque limit value of the electric drive system based on the target torque value and the comparison result of the actual voltage of the high-voltage battery with each of the allowable charge lower limit value and the allowable discharge upper limit value comprises:
setting the available electric torque limit value of the electric drive system as the target torque value, and setting the available power generation torque limit value of the electric drive system as a maximum power generation torque output capacity of the electric drive system, when the actual voltage of the high-voltage battery is smaller than or equal to the allowable discharge upper limit value.

7. The torque control method according to claim 4, wherein said setting the available torque limit value of the electric drive system based on the target torque value and the comparison result of the actual voltage of the high-voltage battery with each of the allowable charge lower limit value and the allowable discharge upper limit value comprises:
setting the available electric torque limit value of the electric drive system as a maximum electric torque output capacity of the electric drive system, and setting the available power generation torque limit value of the electric drive system as a maximum power generation torque output capacity of the electric drive system, when the actual voltage of the high-voltage battery is smaller than the allowable charge lower limit value and greater than the allowable discharge upper limit value.

8. The torque control method according to claim 1, wherein said obtaining the charge cut-off voltage and the discharge cut-off voltage of the high-voltage battery comprises:
obtaining a state parameter of the high-voltage battery, the state parameter comprising a battery state of charge and/or a battery temperature; and
determining the charge cut-off voltage and the discharge cut-off voltage of the high-voltage battery based on the state parameter.

9. A torque control system for an electric drive system, the torque control system comprising:
a memory having a control program stored thereon; and
a processor,
wherein the control program is configured to, when executed by the processor, implement the torque control method according to any one of claims 1 to 8.

## Patentansprüche

1. Drehmomentsteuerverfahren für ein elektrisches Antriebssystem, wobei das elektrische Antriebssystem eine Hochvoltbatterie und einen Motor umfasst, wobei das Drehmomentsteuerverfahren Folgendes umfasst:
Ermitteln (S10) einer Ladeabschaltspannung und einer Entladeabschaltspannung der Hochvoltbatterie;
Festlegen (S20) eines zulässigen Ladeuntergrenzwerts und eines zulässigen Entladeobergrenzwerts, wobei der zulässige Ladeuntergrenzwert kleiner als die Ladeabschaltspannung ist und der zulässige Entladeobergrenzwert größer als die Entladeabschaltspannung ist;
Vergleichen (S30) einer Istspannung der Hochvoltbatterie jeweils mit dem zulässigen Ladeuntergrenzwert und mit dem zulässigen Entladeobergrenzwert;
Festlegen (S40) eines dynamischen Zielspannungswerts, wenn die Istspannung der Hochvoltbatterie größer als oder gleich dem zulässigen Ladeuntergrenzwert oder kleiner als oder gleich dem zulässigen Entladeobergrenzwert ist, wobei der dynamische Zielspannungswert so festgelegt wird, dass verhindert wird, dass die Spannung der Hochvoltbatterie beim Laden über die Ladeabschaltspannung ansteigt und beim Entladen unter die Entladeabschaltspannung abfällt;
Berechnen (S50) eines Zieldrehmomentwerts basierend auf der Istspannung der Hochvoltbatterie und dem dynamischen Zielspannungswert;
Festlegen (S60) eines Grenzwerts für das verfügbare Drehmoment des elektrischen Antriebssystems basierend auf dem Zieldrehmomentwert und einem Vergleichsergebnis der Istspannung der Hochvoltbatterie jeweils mit dem zulässigen Ladeuntergrenzwert und mit dem zulässigen Entladeobergrenzwert, und Steuern einer Drehmomentabgabe des Motors basierend auf dem Grenzwert für das verfügbare Drehmoment,
wobei das Drehmomentsteuerverfahren **dadurch gekennzeichnet ist, dass** das Festlegen des dynamischen Zielspannungswerts, wenn die Istspannung der Hochvoltbatterie größer als oder gleich dem zulässigen Ladeuntergrenzwert oder kleiner als oder gleich dem zulässigen Entladeobergrenzwert ist, Folgendes umfasst:
Festlegen des dynamischen Zielspannungswerts derart, dass dieser ausgehend von dem zulässigen Ladeuntergrenzwert mit einer ersten vorbestimmten Steigung auf die Ladeabschaltspannung ansteigt, wenn die Istspannung der Hochvoltbatterie größer als oder gleich dem zulässigen Ladeuntergrenzwert ist; und
Festlegen des dynamischen Zielspannungswerts derart, dass dieser ausgehend von dem zulässigen Entladeobergrenzwert mit einer zweiten vorbestimmten Steigung auf die Entladeabschaltspannung abfällt, wenn die Istspannung der Hochvoltbatterie kleiner als oder gleich dem zulässigen Entladeobergrenzwert ist.

2. Drehmomentsteuerverfahren nach Anspruch 1, wobei das Berechnen des Zieldrehmomentwerts basierend auf der Istspannung der Hochvoltbatterie und dem dynamischen Zielspannungswert Folgendes umfasst:
Berechnen einer Differenz zwischen der Istspannung und dem dynamischen Zielspannungswert;
Berechnen eines Drehmomentgrenzwerts basierend auf der Differenz und einem PID-Regelalgorithmus; und
Berechnen einer Differenz zwischen einem Ist-Ausgangsdrehmoment des Motors und dem Drehmomentgrenzwert als Zieldrehmomentwert.

3. Drehmomentsteuerverfahren nach Anspruch 1, wobei das Festlegen des zulässigen Ladeuntergrenzwerts und des zulässigen Entladeobergrenzwerts Folgendes umfasst:
Festlegen einer Differenz zwischen der Ladeabschaltspannung und einem ersten Einstellwert als den zulässigen Ladeuntergrenzwert, wobei der erste Einstellwert eine kalibrierte positive Zahl ist; und
Festlegen einer Summe aus der Entladeabschaltspannung und einem zweiten Einstellwert als den zulässigen Entladeobergrenzwert, wobei der zweite Einstellwert eine kalibrierte positive Zahl ist.

4. Drehmomentsteuerverfahren nach Anspruch 1, wobei der Grenzwert für das verfügbare Drehmoment einen Grenzwert für das verfügbare motorische Drehmoment und einen Grenzwert für das verfügbare generatorische Drehmoment umfasst.

5. Drehmomentsteuerverfahren nach Anspruch 4, wobei das Festlegen des Grenzwerts für das verfügbare Drehmoment des elektrischen Antriebssystems basierend auf dem Zieldrehmomentwert und dem Vergleichsergebnis der Istspannung der Hochvoltbatterie jeweils mit dem zulässigen Ladeuntergrenzwert und mit dem zulässigen Entladeobergrenzwert Folgendes umfasst:
Festlegen des Grenzwerts für das verfügbare generatorische Drehmoment des elektrischen Antriebssystems auf den Zieldrehmomentwert und Festlegen des Grenzwerts für das verfügbare motorische Drehmoment des elektrischen Antriebssystems auf die maximale motorische Drehmomentabgabefähigkeit des elektrischen Antriebssystems, wenn die Istspannung der Hochvoltbatterie größer als oder gleich dem zulässigen Ladeuntergrenzwert ist.

6. Drehmomentsteuerverfahren nach Anspruch 4, wobei das Festlegen des Grenzwerts für das verfügbare Drehmoment des elektrischen Antriebssystems basierend auf dem Zieldrehmomentwert und dem Vergleichsergebnis der Istspannung der Hochvoltbatterie jeweils mit dem zulässigen Ladeuntergrenzwert und mit dem zulässigen Entladeobergrenzwert Folgendes umfasst:
Festlegen des Grenzwerts für das verfügbare motorische Drehmoment des elektrischen Antriebssystems auf den Zieldrehmomentwert und Festlegen des Grenzwerts für das verfügbare generatorische Drehmoment des elektrischen Antriebssystems auf die maximale generatorische Drehmomentabgabefähigkeit des elektrischen Antriebssystems, wenn die Istspannung der Hochvoltbatterie kleiner als oder gleich dem zulässigen Entladeobergrenzwert ist.

7. Drehmomentsteuerverfahren nach Anspruch 4, wobei das Festlegen des Grenzwerts für das verfügbare Drehmoment des elektrischen Antriebssystems basierend auf dem Zieldrehmomentwert und dem Vergleichsergebnis der Istspannung der Hochvoltbatterie jeweils mit dem zulässigen Ladeuntergrenzwert und mit dem zulässigen Entladeobergrenzwert Folgendes umfasst:
Festlegen des Grenzwerts für das verfügbare motorische Drehmoment des elektrischen Antriebssystems auf die maximale motorische Drehmomentabgabefähigkeit des elektrischen Antriebssystems und Festlegen des Grenzwerts für das verfügbare generatorische Drehmoment des elektrischen Antriebssystems auf die maximale generatorische Drehmomentabgabefähigkeit des elektrischen Antriebssystems, wenn die Istspannung der Hochvoltbatterie kleiner als der zulässige Ladeuntergrenzwert und größer als der zulässige Entladeobergrenzwert ist.

8. Drehmomentsteuerverfahren nach Anspruch 1, wobei das Ermitteln der Ladeabschaltspannung und der Entladeabschaltspannung der Hochvoltbatterie Folgendes umfasst:
Ermitteln eines Zustandsparameters der Hochvoltbatterie, wobei der Zustandsparameter einen Ladezustand der Batterie und/oder eine Batterietemperatur umfasst; und
Bestimmen der Ladeabschaltspannung und der Entladeabschaltspannung der Hochvoltbatterie basierend auf dem Zustandsparameter.

9. Drehmomentsteuersystem für ein elektrisches Antriebssystem, wobei das Drehmomentsteuersystem Folgendes umfasst:
einen Speicher, auf dem ein Steuerprogramm gespeichert ist; und
einen Prozessor,
wobei das Steuerprogramm dazu eingerichtet ist, bei Ausführung durch den Prozessor das Drehmomentsteuerverfahren nach einem der Ansprüche 1 bis 8 auszuführen.

## Revendications

1. Méthode de commande de couple pour un système d'entraînement électrique, dans laquelle le système d'entraînement électrique comprend une batterie haute tension et un moteur, la méthode de commande de couple comprenant :
l'obtention (S10) d'une tension de coupure de charge et d'une tension de coupure de décharge de la batterie haute tension ;
le réglage (S20) d'une valeur limite inférieure de charge admissible et d'une valeur limite supérieure de décharge admissible, la valeur limite inférieure de charge admissible étant inférieure à la tension de coupure de charge, et la valeur limite supérieure de décharge admissible étant supérieure à la tension de coupure de décharge ;
la comparaison (S30) d'une tension réelle de la batterie haute tension avec chacune parmi la valeur limite inférieure de charge admissible et la valeur limite supérieure de décharge admissible ;
le réglage (S40) d'une valeur de tension cible dynamique lorsque la tension réelle de la batterie haute tension est supérieure ou égale à la valeur limite inférieure de charge admissible ou est inférieure ou égale à la valeur limite supérieure de décharge admissible, la valeur de tension cible dynamique étant configurée pour empêcher une tension de la batterie haute tension de monter au-delà de la tension de coupure de charge pendant la charge et de chuter en dessous de la tension de coupure de décharge pendant la décharge ;
le calcul (S50) d'une valeur de couple cible sur la base de la tension réelle de la batterie haute tension et de la valeur de tension cible dynamique ;
le réglage (S60) d'une valeur limite de couple disponible du système d'entraînement électrique sur la base de la valeur de couple cible et d'un résultat de comparaison de la tension réelle de la batterie haute tension avec chacune parmi la valeur limite inférieure de charge admissible et la valeur limite supérieure de décharge admissible, et la commande d'une sortie de couple du moteur sur la base de la valeur limite de couple disponible,
dans laquelle la méthode de commande de couple est **caractérisée en ce que**, ledit réglage de la valeur de tension cible dynamique lorsque la tension réelle de la batterie haute tension est supérieure ou égale à la valeur limite inférieure de charge admissible ou est inférieure ou égale à la valeur limite supérieure de décharge admissible comprend :
le réglage de la valeur de tension cible dynamique de manière à augmenter jusqu'à la tension de coupure de charge depuis la valeur limite inférieure de charge admissible selon une première pente prédéterminée, lorsque la tension réelle de la batterie haute tension est supérieure ou égale à la valeur limite inférieure de charge admissible ; et
le réglage de la valeur de tension cible dynamique de manière à diminuer jusqu'à la tension de coupure de décharge depuis la valeur limite supérieure de décharge admissible selon une seconde pente prédéterminée, lorsque la tension réelle de la batterie haute tension est inférieure ou égale à la valeur limite supérieure de décharge admissible.

2. Méthode de commande de couple selon la revendication 1, dans laquelle ledit calcul de la valeur de couple cible sur la base de la tension réelle de la batterie haute tension et de la valeur de tension cible dynamique comprend :
le calcul d'une différence entre la tension réelle et la valeur de tension cible dynamique ;
le calcul d'une valeur limite de couple sur la base de la différence et d'un algorithme de commande PID ; et
le calcul d'une différence entre un couple de sortie réel du moteur et la valeur limite de couple comme étant la valeur de couple cible.

3. Méthode de commande de couple selon la revendication 1, dans laquelle ledit réglage de la valeur limite inférieure de charge admissible et de la valeur limite supérieure de décharge admissible comprend :
le réglage d'une différence entre la tension de coupure de charge et une première valeur de consigne comme étant la valeur limite inférieure de charge admissible, la première valeur de consigne étant un nombre positif étalonné ; et
le réglage d'une somme de la tension de coupure de décharge et d'une seconde valeur de consigne comme étant la valeur limite supérieure de décharge admissible, la seconde valeur de consigne étant un nombre positif étalonné.

4. Méthode de commande de couple selon la revendication 1, dans laquelle la valeur limite de couple disponible comprend une valeur limite de couple électrique disponible et une valeur limite de couple générateur disponible.

5. Méthode de commande de couple selon la revendication 4, dans laquelle ledit réglage de la valeur limite de couple disponible du système d'entraînement électrique sur la base de la valeur de couple cible et du résultat de comparaison de la tension réelle de la batterie haute tension avec chacune parmi la valeur limite inférieure de charge admissible et la valeur limite supérieure de décharge admissible comprend :
le réglage de la valeur limite de couple générateur disponible du système d'entraînement électrique comme étant la valeur de couple cible, et le réglage de la valeur limite de couple électrique disponible du système d'entraînement électrique comme étant une capacité maximale de sortie de couple électrique du système d'entraînement électrique, lorsque la tension réelle de la batterie haute tension est supérieure ou égale à la valeur limite inférieure de charge admissible.

6. Méthode de commande de couple selon la revendication 4, dans laquelle ledit réglage de la valeur limite de couple disponible du système d'entraînement électrique sur la base de la valeur de couple cible et du résultat de comparaison de la tension réelle de la batterie haute tension avec chacune parmi la valeur limite inférieure de charge admissible et la valeur limite supérieure de décharge admissible comprend :
le réglage de la valeur limite de couple électrique disponible du système d'entraînement électrique comme étant la valeur de couple cible, et le réglage de la valeur limite de couple générateur disponible du système d'entraînement électrique comme étant une capacité maximale de sortie de couple générateur du système d'entraînement électrique, lorsque la tension réelle de la batterie haute tension est inférieure ou égale à la valeur limite supérieure de décharge admissible.

7. Méthode de commande de couple selon la revendication 4, dans laquelle ledit réglage de la valeur limite de couple disponible du système d'entraînement électrique sur la base de la valeur de couple cible et du résultat de comparaison de la tension réelle de la batterie haute tension avec chacune parmi la valeur limite inférieure de charge admissible et la valeur limite supérieure de décharge admissible comprend :
le réglage de la valeur limite de couple électrique disponible du système d'entraînement électrique comme étant une capacité maximale de sortie de couple électrique du système d'entraînement électrique, et le réglage de la valeur limite de couple générateur disponible du système d'entraînement électrique comme étant une capacité maximale de sortie de couple générateur du système d'entraînement électrique, lorsque la tension réelle de la batterie haute tension est inférieure à la valeur limite inférieure de charge admissible et supérieure à la valeur limite supérieure de décharge admissible.

8. Méthode de commande de couple selon la revendication 1, dans laquelle ladite obtention de la tension de coupure de charge et de la tension de coupure de décharge de la batterie haute tension comprend :
l'obtention d'un paramètre d'état de la batterie haute tension, le paramètre d'état comprenant un état de charge de batterie et/ou une température de batterie ; et
la détermination de la tension de coupure de charge et de la tension de coupure de décharge de la batterie haute tension sur la base du paramètre d'état.

9. Système de commande de couple pour un système d'entraînement électrique, le système de commande de couple comprenant :
une mémoire sur laquelle est stocké un programme de commande ; et
un processeur,
dans lequel le programme de commande est configuré pour, lorsqu'il est exécuté par le processeur, mettre en œuvre la méthode de commande de couple selon l'une quelconque des revendications 1 à 8.
